# EUROPÄISCHE PATENTSCHRIFT

(11) **EP 3 992 512 B1**
(45) Veröffentlichungstag und Bekanntmachung des Hinweises auf die Patenterteilung: **13.12.2023**
(21) Anmeldenummer: 21201215.7
(22) Anmeldetag: 06.10.2021
(51) Int. Cl.: F16L 17/025, F16L 17/03, F16L 21/03

(54) **ROHRMUFFE**
PIPE SLEEVE
MANCHON DE TUYAU

(30) Priorität: 30.10.2020 DE 102020128637
(43) Veröffentlichungstag der Anmeldung: 04.05.2022
(73) Patentinhaber: Poloplast GmbH & Co. KG, 4060 Leonding (AT)
(72) Erfinder: MAYRBÄURL, Erwin, 4481 Asten (AT); HEINDL, Andreas, 4030 Linz (AT)
(74) Vertreter: Hoefer & Partner Patentanwälte mbB

(56) Entgegenhaltungen:
- DE-A1- 3 120 266
- DE-B3-102004 038 811
- US-A- 6 142 484
- US-A1- 2006 175 765
- US-E- R E34 874

## Beschreibung

Die Erfindung betrifft eine Rohrmuffe mit elastischem Dichtmittel. Die Rohrmuffe ist insbesondere Bestandteil eines drucklosen Rohrsystems, wie beispielsweise eines Abflussrohrsystems.

Eine vorbekannte Rohrmuffe zeigt DE 10 2004 038 811 B3. Die hier offenbarte Rohrmuffe umfasst zwei steife Ringe, die über einen elastischen Dichtring (Zwischenring) mit einer nach innen ragenden Dichtlippe verbunden sind. In die Rohrmuffe kann ein Rohr eingesteckt werden. Aufgrund des unlöslich mit der Muffe verbundenen Dichtmittels (ist es möglich, auch Rohre ohne Anfasung am Spitzende zu stecken, da ein Ausschieben des Dichtmittels unmöglich ist. Hierfür sind in der Regel jedoch hohe Einsteckkräfte erforderlich. Aber auch bei herkömmlichen, in eine Sicke eingelegten Dichtmitteln sind niedrige Einsteckkräfte wünschenswert.

US 2006 / 0 175 765 A1 offenbart eine zweiteilige Dichtung zur Anordnung in einer Rohrmuffe. Die zweiteilige Dichtung umfasst einen Stützring aus relativ steifem Material und einen Dichtring mit Dichtlippe aus elastischem Material.

Es ist Aufgabe der vorliegenden Erfindung, eine Rohrmuffe anzugeben, die bei einfacher Herstellung und einfacher Montage eine möglichst leichte Steckbarkeit zwischen Rohrmuffe und einzusteckendem Rohr ermöglicht; insbesondere unabhängig davon, ob es sich um ein Rohrende eines spritzgegossenen Formstücks oder eines extrudierten oder pultrudierten Rohres handelt.

Die Lösung der Aufgabe erfolgt durch die Merkmale der unabhängigen Ansprüche. Die abhängigen Ansprüche haben weitere Ausgestaltungen der Erfindung zum Gegenstand.

Die Erfindung zeigt eine Rohrmuffe, die insbesondere für ein druckloses Rohrsystem, beispielsweise ein Abflussrohrsystem verwendet wird. Die Rohrmuffe kann über eine Verjüngung in einen Rohrfortsatz übergehen und bildet somit das eine Ende eines Rohres. Das gegenüberliegende, nicht mit der Muffe versehene Ende des Rohres wird üblicherweise als

Spitzende bezeichnet und ist dazu ausgebildet, in eine Rohrmuffe eingeschoben zu werden. Ferner kann die Rohrmuffe z.B. auch integraler Bestandteil eines Formstücks oder einer Doppelmuffe sein.

Die Rohrmuffe weist einen zylindrischen Grundkörper mit einer stirnseitigen Öffnung zum Einstecken eines Spitzendes auf. In der Rohrmuffe befindet sich ein elastisches Dichtmittel. Dieses Dichtmittel wiederum setzt sich aus einem Dichtring und einer ringförmigen Dichtlippe zusammen. Die Dichtlippe weist von dem Dichtring aus nach innen. Der Dichtring ist zusammen mit der Dichtlippe einstückig gefertigt. Das gesamte Dichtmittel, also insbesondere der Dichtring und die Dichtlippe, sind vorzugsweise geschlossen ringförmig ausgestaltet. Das Dichtmittel ist beispielsweise aus einem thermoplastischen Elastomer gefertigt.

Die im Rahmen der Erfindung gewählten Begriffe "elastisch" und "steif" beziehen sich auf die auftretende Elastizität und elastische Verformung bei der Verwendung der Rohrmuffe, nicht jedoch auf die Tatsache, dass ein steifer Ring keinerlei Elastizität im Sinne der klassischen Mechanik aufweisen dürfte.

Zur Anordnung dieses Dichtmittels in der Rohrmuffe gibt es grundsätzlich zwei Ausgestaltungen:
Gemäß der ersten Ausgestaltung ist vorgesehen, dass sich der Grundkörper der Muffe aus zwei steifen Ringen zusammensetzt, die über den Dichtring verbunden sind. Das Dichtmittel ist somit integraler Bestandteil der Rohrmuffe. Der Dichtring ist zwischen den beiden Ringen angeordnet, wobei der erste Ring und der zweite Ring insbesondere ausschließlich über den Dichtring miteinander verbunden sind. Der Dichtring ist vorzugsweise an einem Stirnende mit dem ersten Ring und am gegenüberliegenden Stirnende mit dem zweiten Ring verbunden. Der Dichtring und somit das ganze Dichtmittel ist insbesondere direkt und einstückig mit dem ersten Ring und dem zweiten Ring ausgebildet. Insbesondere kommt hier ein einstückiges Herstellungsverfahren zur Anwendung, bei dem in einem 2-Komponenten-Verfahren die beiden steifen Ringe und der elastische Dichtring hintereinander geformt werden. Alternativ ist es auch möglich, den Dichtring mit den beiden steifen Ringen zu verkleben oder den Dichtring nur mit einem der beiden steifen Ringe in einem 2-Komponenten-Verfahren zu spritzen, und mit dem jeweils anderen steifen Ring zu verkleben. Das elastische Dichtmittel, insbesondere der Dichtring, ist an seiner radial äußeren Seite vorzugsweise durch kein steifes Element begrenzt. Dadurch kann sich der Dichtring radial nach außen ausdehnen, beispielsweise wenn ein Rohr eingesteckt wird und sich dabei die Dichtung verformt und vorspannt.

Gemäß der zweiten Ausgestaltung ist das Dichtmittel kein integraler Bestandteil des Grundkörpers. Vielmehr weist der Grundkörper eine nach innen offene Sicke auf. In diese Sicke ist das Dichtmittel eingelegt. Diese Bauart hat zum Vorteil, dass das Dichtmittel ausgewechselt werden kann.

In beiden Ausgestaltungen, sowohl bei der integralen Anordnung des Dichtmittels zwischen den beiden steifen Ringen als auch bei der Anordnung in der Sicke, ist der Dichtring in erster Linie für die Anbindung des Dichtmittels an den Grundkörper der Rohrmuffe zuständig. Von dem Dichtring nach innen weist die ringförmige Dichtlippe. Diese Dichtlippe wird durch das einzusteckende Rohr umgelegt und radial nach außen verformt. Dabei kommt es zum Anliegen der Dichtfläche der Dichtlippe an dem inneren Rohr und somit zum Abdichten der Rohrverbindung.

Das Dichtmittel weist eine der stirnseitigen Öffnung der Rohrmuffe zuzuwendende Einsteckseite auf. Die Dichtlippe ist von dieser Einsteckseite weg geneigt, wobei auf der der Einsteckseite gegenüberliegende Seite vorzugsweise ein rechter Winkel oder ein spitzer Winkel zwischen Dichtring und Dichtlippe gegeben ist.

Das Dichtmittel weist an seiner Einsteckseite eine Vielzahl an Ausnehmungen auf, die entlang des Umfangs des Dichtmittels verteilt sind. Die Ausnehmungen sind somit zur Einsteckseite hin offen. Bei den Ausnehmungen handelt es sich insbesondere um sackförmige bzw. taschenförmige Ausnehmungen und somit nicht um Durchgangsausnehmungen bzw. Durchgangslöcher. Die Ausnehmungen bilden insbesondere hohle Freiräume innerhalb des Dichtmittels.

Die Ausnehmungen haben entscheidende Vorteile beim Zusammenstecken der Rohrverbindung: Durch die Ausnehmungen ist das Dichtmittel, insbesondere die Dichtlippe, entlang des Umfangs unterschiedlich dick ausgeführt. Dadurch wird ein Freiraum für das Ausweichen des Materials des Dichtmittels während des Steckvorgangs geschaffen und das Umbiegen/Umlegen der Dichtlippe wird erleichtert.

Insbesondere befinden sich die Ausnehmungen nicht am radial äußeren Rand des Dichtmittels. Insbesondere befinden sich die Ausnehmungen zumindest teilweise in der Dichtlippe und nicht ausschließlich im Dichtring. Insbesondere sind die Ausnehmungen zur Einsteckseite hin offen, radial nach außen und ggf. radial nach innen jedoch geschlossen.

Besonders bevorzugt ist vorgesehen, dass das hier beschriebene Dichtmittel lediglich die eine ringförmige Dichtlippe aufweist, Insbesondere ist vorgesehen, dass das komplette Dichtmittel einstückig gefertigt ist und nicht etwa zusätzliche Teile, wie eingelegte Metallteile oder sonstiges in dem Dichtmittel vorgesehen sind. Darüber hinaus handelt es sich vorzugsweise um ein Dichtmittel, das lediglich durch das einzusteckende Rohr deformiert wird und dadurch seine elastische Rückstellkraft für die Abdichtung erfährt. Insbesondere ist an der Rohrmuffe kein sonstiges Mittel zur axialen und/oder radialen Deformierung oder Verspannung des Dichtmittels vorgesehen. Ein derart einfach ausgestaltetes Dichtmittel eignet sich insbesondere für die Verwendung bei einem drucklosen, steckbaren Rohrsystem.

Im Folgenden werden zu unterschiedlichen Ausgestaltungen der Rohrmuffe bzw. des Dichtmittels Obergrenzen und Untergrenzen von Wertebereichen definiert. Dabei ist stets zu verstehen, dass die Obergrenzen und Untergrenzen frei miteinander kombinierbar sind.

Die Dichtlippe weist an der Einsteckseite vorzugsweise eine Anlaufschräge auf, die in eine Dichtfläche übergeht. Die Anlaufschräge kommt beim Einstecken des Rohres insbesondere mit der Stirnseite des einzusteckenden Rohres in Kontakt. Dieser Kontakt führt dabei zum Umlegen der Dichtlippe und zur Verformung der Dichtlippe bzw. des gesamten Dichtmittels radial nach außen.

Radial innerhalb der Anlaufschräge ist die Dichtfläche der Dichtlippe ausgebildet. Diese Dichtfläche kommt auf dem äußeren Umfang des einzusteckenden Rohres zu liegen und sorgt für die Abdichtung. Die Dichtlippe unterstützt dabei die Dichtheit bei erhöhtem Überdruck, in dem die Dichtlippe durch den anliegenden Fluiddruck zusätzlich an die abzudichtende Rohroberfläche gepresst wird.

Im nicht deformierten Zustand des Dichtmittels kann die Anlaufschräge radial nach innen unmittelbar in die Dichtfläche übergehen. Die Ausnehmungen sind vorzugsweise lediglich in der Anlaufschräge, jedoch nicht in der Dichtfläche positioniert. Insbesondere werden die Ausnehmungen so positioniert, dass radial innerhalb der Ausnehmungen eine durchgehende ringförmige Dichtfläche auf der Dichtlippe verbleibt, in der keine Ausnehmungen ausgebildet sind. Dadurch wird durch die Ausnehmungen die Abdichtung nicht verschlechtert.

Wie beschrieben haben die Ausnehmungen Vorteile beim Zusammenstecken der Rohrverbindung. Durch die Ausnehmungen ist das Dichtmittel insbesondere im Bereich der Anlaufschräge entlang des Umfangs unterschiedlich dick ausgeführt. Dadurch wird ein Freiraum für das Ausweichen des Materials des Dichtmittels während des Steckvorgangs geschaffen und das Umbiegen/Umlegen der Dichtlippe wird erleichtert. Zusätzlich wird das einzusteckende Spitzende des Rohrs an den Bereichen der Anlaufschräge ohne Ausnehmungen ausreichend gut vorzentriert und geführt. So ist es insbesondere von Vorteil, wenn die Ausnehmungen nicht die komplette Anlaufschräge überdecken, sondern zwischen den Ausnehmungen Bereiche der Anlaufschräge verbleiben. Dadurch gibt es zwei Effekte, die zum Erleichtern bzw. zum Reduzieren der Einsteckkraft führen: zum einen wird durch die Anlaufschräge die Kraftübertragung vom einzusteckenden Rohr auf die Dichtlippe verbessert und die Dichtlippe kann leichter umgebogen werden; zum anderen ermöglichen die Ausnehmungen ein Ausweichen bzw. Deformieren des Materials des Dichtmittels auch in Umfangsrichtung und Radialrichtung, so dass es auch so zu einem einfachen Umbiegen und Deformieren der Dichtlippe kommt.

Vorzugsweise ist die Dichtfläche mit einem Dichtflächenwinkel gegenüber der Mittelachse geneigt. Die Anlaufschräge ist vorzugsweise, zumindest außerhalb der Ausnehmungen, mit einem Anlaufwinkel gegenüber der Mittelachse geneigt. Da die Anlaufschräge unmittelbar in die Dichtfläche übergehen kann, können auch die beiden Winkel (Dichtflächenwinkel und Anlaufwinkel) gleich groß sein. Allerdings kann die Dichtlippe auch so ausgestaltet sein, dass sich diese beiden Winkel unterscheiden. Sowohl der Dichtflächenwinkel als auch der Anlaufwinkel sind bevorzugt so gewählt, dass die Dichtlippe von der Einsteckseite weg geneigt ist; so, dass auf der der Einsteckseite gegenüberliegenden Seite ein spitzer Winkel zwischen Dichtring und Dichtlippe entsteht.

Insbesondere ist vorgesehen, dass der Dichtflächenwinkel unter Berücksichtigung der soeben beschriebenen Neigungsrichtung 10 bis 80°, vorzugsweise 20 bis 70°, beträgt. Zusätzlich oder alternativ ist vorgesehen, dass der Anlaufwinkel unter Berücksichtigung der soeben beschriebenen Neigungsrichtung 10° bis 80°, vorzugsweise 20° bis 70°, beträgt.

Bei Betrachtung der Querschnittsfläche des Dichtmittels weist dieses Bereiche mit größter Querschnittsfläche und Bereiche mit kleinster Querschnittsfläche auf. Die Bereiche mit kleinster Querschnittsfläche verlaufen durch die Ausnehmungen. Zwischen den Ausnehmungen bzw. an Stellen, wo zwei benachbarte Ausnehmungen ineinander übergehen, ist die größte Querschnittsfläche des Dichtmittels gegeben.

Die Obergrenze der kleinsten Querschnittsfläche beträgt insbesondere 98 %, vorzugsweise 95 %, besonders vorzugsweise 90 %, der größten Querschnittsfläche. Zusätzlich oder alternativ ist vorgesehen, dass die Untergrenze der kleinsten Querschnittsfläche 50 %, vorzugsweise 60 %, besonders vorzugsweise 70 %, der größten Querschnittsfläche beträgt.

Darüber hinaus ist eine Ausnehmungstiefe der einzelnen Ausnehmungen wie folgt definiert: Das Dichtmittel weist in Axialrichtung an seiner dicksten Stelle eine Dichtmitteldicke auf.

Die Axialrichtung ist dabei durch die Mittelachse der Rohrmuffe, die identisch mit der Mittelachse des Dichtmittels ist, definiert. Die jeweilige Ausnehmung weist, ebenfalls in Axialrichtung gemessen, an ihrer tiefsten Stelle eine Ausnehmungstiefe auf. Insbesondere ist vorgesehen, dass die Obergrenze der Ausnehmungstiefe 50 %, vorzugsweise 40 %, der Dichtmitteldicke beträgt. Zusätzlich oder alternativ ist bevorzugt vorgesehen, dass die Untergrenze der Ausnehmungstiefe 5 %, vorzugsweise 10 %, der Dichtmitteldicke beträgt.

Die Erstreckung der jeweiligen Ausnehmung in Umfangsrichtung wird als "Ausnehmungs-Bogenlänge" bezeichnet. Die jeweilige Ausnehmung weist an ihrem radial inneren Ende vorzugsweise ihre größte Ausnehmungs-Bogenlänge auf. Radial nach außen verjüngt sich diese Ausnehmungs-Bogenlänge. Durch die radial nach außen gerichtete Verjüngung wird berücksichtigt, dass insbesondere im radial inneren Bereich des Dichtmittels der größte Effekt zur Erleichterung des Umbiegens und des Deformierens der Dichtlippe erzielt werden kann.

Zur weiteren Definition von Anzahl und Position der Ausnehmungen ist das Dichtmittel entlang seines Umfangs in imaginäre Segmente unterteilt. In jedem Segment befindet sich dabei höchstens eine Ausnehmung; also entweder eine Ausnehmung oder keine Ausnehmung. Die Segmente sind vorzugsweise gleich verteilt. Insbesondere beträgt eine Obergrenze des jeweiligen Segmentwinkels 45°, vorzugsweise 30°, besonders vorzugsweise 20°. Beispielsweise bei dem Segmentwinkel von 45° sind acht Segmente vorgesehen. Zusätzlich oder alternativ ist insbesondere eine Untergrenze des Segmentwinkels von 3°, vorzugsweise 5°, besonders vorzugsweise 10°, vorgesehen.

Die jeweilige Ausnehmung weist eine Ausnehmungsbreite auf. Die Ausnehmungsbreite ist durch den Bereich der Ausnehmung mit seiner größten Ausnehmungs-Bogenlänge definiert; also insbesondere am radial inneren Ende der Ausnehmung. Auf dem Kreis der Ausnehmungsbreite ist auch die Segment-Bogenlänge des zugehörigen Segments definiert. Beträgt die Ausnehmungsbreite beispielsweise 100 % der Segment-Bogenlänge, so erstreckt sich die entsprechende Ausnehmung an ihrer breitesten Stelle (bezogen auf den Umfang) über das gesamte Segment.

Insbesondere beträgt die Obergrenze der Ausnehmungsbreite 100 %, vorzugsweise 99 %, besonders vorzugsweise 95 %, der Segment-Bogenlänge. Zusätzlich oder alternativ beträgt die Untergrenze insbesondere 20 %, vorzugsweise 50 %, der Segment-Bogenlänge.

Bei einer Ausgestaltung der Ausnehmung mit einer Ausnehmungsbreite von 100 % der Segment-Bogenlänge können die benachbarten Ausnehmungen unmittelbar aneinandergrenzen. Dadurch, dass die Ausnehmungs-Bogenlänge radial nach außen jedoch abnimmt, verbleibt zwischen den Ausnehmungen ausreichend viel Fläche der Dichtlippe ohne Ausnehmungen und somit zur Bereitstellung der gewünschten Anlaufschräge.

Des Weiteren ist bevorzugt vorgesehen, dass in jedem Segment genau eine Ausnehmung angeordnet ist. Alternativ ist nur in jedem zweiten Segment oder nur in jedem dritten Segment oder nur in jedem vierten Segment eine Ausnehmung angeordnet. Auch eine sonstige Verteilung der Ausnehmungen auf die Segmente ist möglich.

Ferner offenbart ist ein Rohrsystem. Das Rohrsystem umfasst zumindest die beschriebene Rohrmuffe und ein zugehöriges Rohr, dessen Spitzende in die Rohrmuffe einsteckbar ist, so dass beim Einstecken das stirnseitige Ende des Rohrs auf die Anlaufschräge trifft und nach dem Einstecken die Dichtfläche der Dichtlippe am äußeren Umfang des eingesteckten Rohrs dichtend aufliegt.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine erfindungsgemäße Rohrmuffe mit Dichtmittel gemäß einem Ausführungsbeispiel der Erfindung,
- Fig. 2: eine erste Ansicht des Dichtmittels aus Fig. 1,
- Fig. 3: eine Detailansicht zu Fig. 2,
- Fig. 4: den in Fig. 2 gekennzeichneten Schnitt A-A,
- Fig. 5: den in Fig. 2 gekennzeichneten Schnitt B-B, und
- Fig. 6: eine alternative Ausgestaltung der erfindungsgemäßen Rohrmuffe mit dem Dichtmittel.

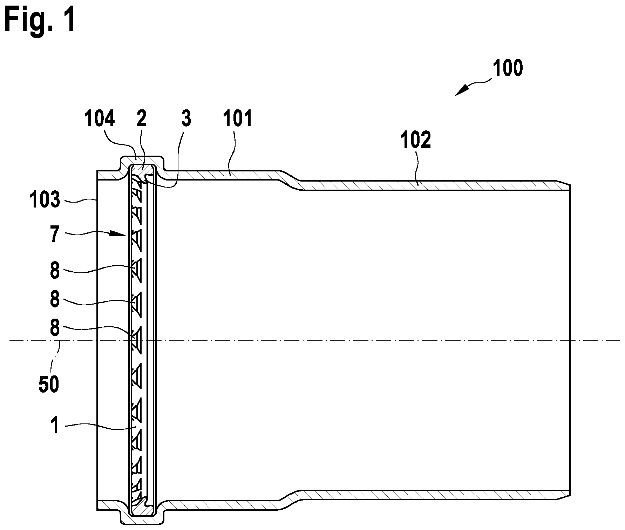

Fig. 1 zeigt eine Rohrmuffe 100 mit einem steifen Grundkörper 101. Die Rohrmuffe 100 geht im gezeigten Beispiel über eine Verjüngung in einen Rohrfortsatz 102 über. Die Rohrmuffe 100 weist eine stirnseitige Öffnung 103 zum Einstecken eines weiteren Rohres auf. Die gezeigte Rohrmuffe 100 ist Bestandteil eines drucklosen, steckbaren Rohrsystems, beispielsweise für Abflussrohre.

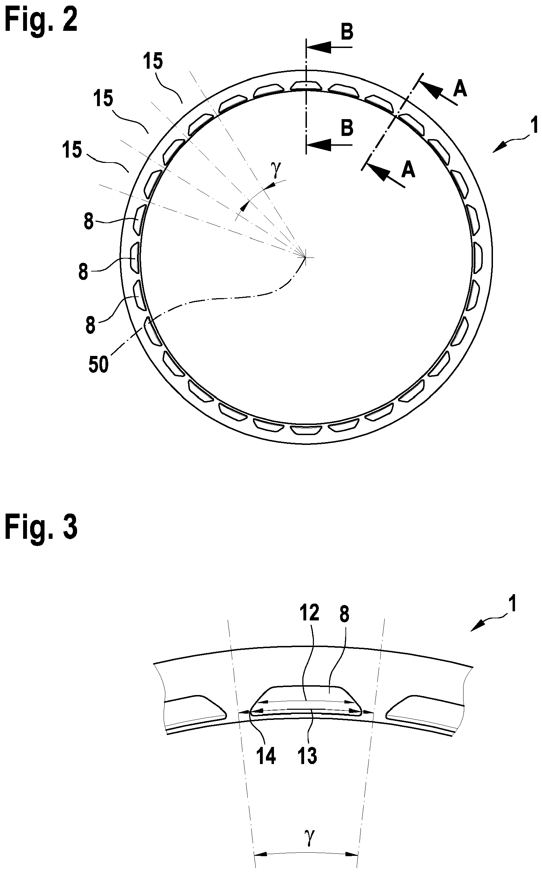

In der Rohrmuffe 100 ist eine nach innen offene Sicke 104 ausgebildet. In dieser Sicke 104 ist ein Dichtmittel 1 eingesetzt. Das Dichtmittel 1 wird anhand der Fig. 2 bis 5 im Detail beschrieben.

Sowohl das Dichtmittel 1 als auch die Rohrmuffe 100 erstrecken sich geschlossen ringförmig um eine Mittelachse 50. Die Mittelachse 50 definiert auch die Richtungen wie Axialrichtung, Radialrichtung oder Umfangsrichtung.

Das Dichtmittel 1 umfasst in einstückiger Ausgestaltung einen Dichtring 2 und eine Dichtlippe 3. Sowohl der Dichtring 2 als auch die Dichtlippe 3 sind aus einem elastischen Material gefertigt und bilden einen geschlossenen Ring. Der Dichtring 2 dient dabei zur Aufnahme des Dichtmittels 1 in der Sicke 104 der Rohrmuffe 100. Von diesem Dichtring 2 erstreckt sich die Dichtlippe 3 radial nach innen. Die der stirnseitigen Öffnung 103 zugewandte Seite des Dichtmittels 1 wird als Einsteckseite 7 bezeichnet. Die Dichtlippe 3 ist von dieser Einsteckseite 7 weg geneigt. An der der Einsteckseite 7 gegenüberliegenden Seite ist ein rückseitiger Hohlraum 6 des Dichtmittels 1 wischen Dichtlippe 3 und Dichtring 2 gebildet. Beim Einstecken eines Rohrs und somit bei Umlegen der Dichtlippe 3 verkleinert sich dieser rückseitige Hohlraum 6 bzw. verschwindet der rückseitige Hohlraum 6.

Wie beispielsweise Fig. 2 oder die Detailansicht in Fig. 3 zeigt, kann das Dichtmittel 1 in imaginäre Segmente 15 mit einem jeweiligen Segmentwinkel γ eingeteilt werden. In jedem Segment 15 befindet sich auf der Einsteckseite 7 eine Ausnehmung 8, die hier taschenförmig ausgebildet ist und sich im Wesentlichen in der Dichtlippe 3 befindet.

Die Detaildarstellung in Fig. 3 zeigt, dass die einzelne Ausnehmung 8 eine Ausnehmungs-Bogenlänge 12 aufweist. Die Ausnehmungs-Bogenlänge 12 ist radial innen am größten; in diesem Bereich ist die Ausnehmungsbreite 13 definiert. Radial nach außen nimmt die Ausnehmungs-Bogenlänge 12 der Ausnehmung 8 ab.

Auf dem Kreisabschnitt der Ausnehmungsbreite 13 ist auch die Segment-Bogenlänge 14 definiert. Wie im allgemeinen Teil der Beschreibung erläutert wurde, kann sich die Ausnehmungsbreite 13 bis zu 100 % der Segment-Bogenlänge 14 erstrecken.

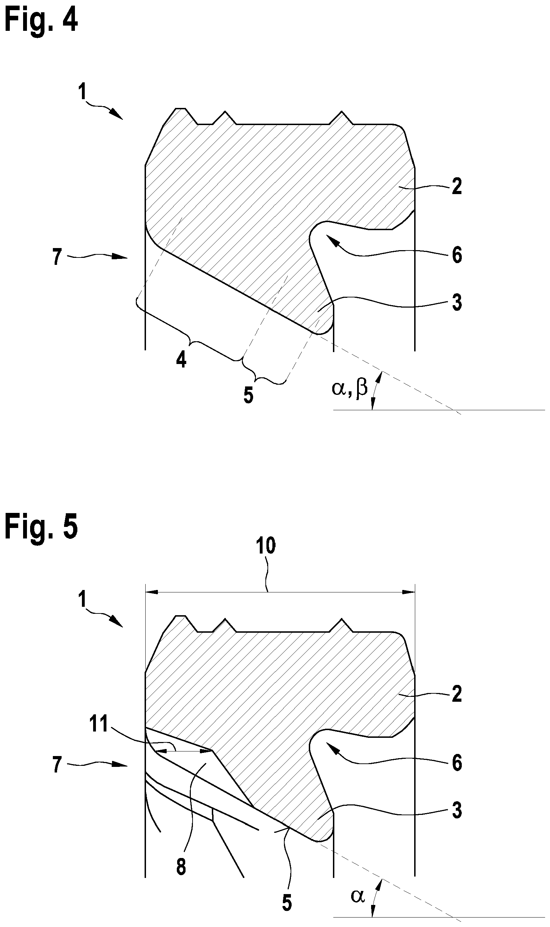

In Fig. 2 sind die beiden Schnitte A-A und B-B gekennzeichnet. Die zugehörigen Schnittbilder und somit die zugehörigen Querschnitte des Dichtmittels 1 zeigen die Fig. 4 und 5.

Fig. 4 zeigt mit Schnitt A-A einen Bereich zwischen zwei Aussparungen 8 und somit einen Bereich mit größter Querschnittsfläche. Fig. 5 zeigt mit Schnitt B-B den Querschnitt durch eine Ausnehmung 8 und somit einen Bereich des Dichtmittels 1 mit kleinster Querschnittsfläche.

Die Größenverhältnisse dieser beiden Querschnittsflächen wurden im allgemeinen Teil der Beschreibung definiert.

Die Zusammenschau der Fig. 4 und 5 zeigt, dass die Dichtlippe 3 an ihrer Einsteckseite 7 eine Anlaufschräge 4 aufweist, die in eine Dichtfläche 5 übergeht. Die Anlaufschräge 4 und die Dichtfläche 5 sind im nicht deformierten Zustand des Dichtmittels 1 konische, ringförmige Flächen.

Die Auflaufschräge 4 weist gegenüber der Mittelachse 50 einen Anlaufwinkel β auf. Die Dichtfläche 5 weist gegenüber der Mittelachse 50 einen Dichtflächenwinkel α auf. Im gezeigten Ausführungsbeispiel, wie in Fig. 4 zu sehen ist, sind die beiden Winkel α, β gleich, da hier die Anlaufschräge 4 in die Dichtfläche 5 übergeht.

Fig. 5 verdeutlicht, dass die Ausnehmung 8 lediglich im Bereich der Anlaufschräge 4, nicht jedoch im Bereich der Dichtfläche 5, ausgebildet ist.

Eine Ausnehmungstiefe 11 der Ausnehmung 8 ist parallel zur Mittelachse 50 definiert und erstreckt sich an der tiefsten Stelle der Ausnehmung 8 von der Anlaufschräge 4 bzw. der imaginären Verlängerung der Anlaufschräge 4 bis zum Grund der Ausnehmung 8. Demgegenüber weist das gesamte Dichtmittel 1, ebenfalls parallel zur Mittelachse 50 gemessen, die Dichtmitteldicke 10 auf. Das Verhältnis zwischen Dichtmitteldicke 10 und Ausnehmungstiefe 11 wurde im allgemeinen Teil der Beschreibung bereits definiert.

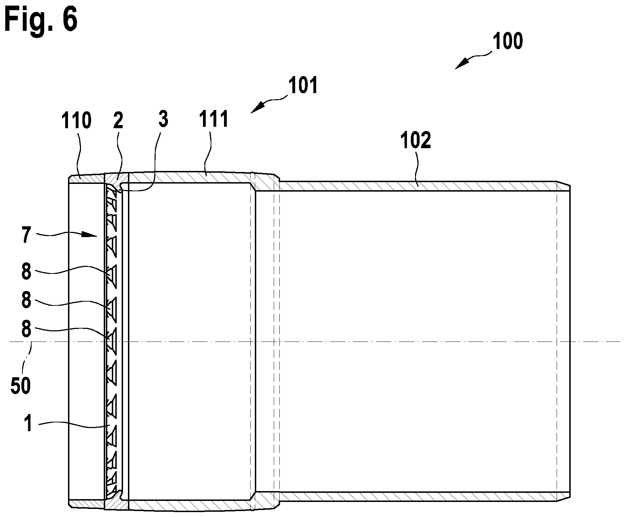

Fig. 6 zeigt eine alternative Ausgestaltung der Rohrmuffe 100. Hier ist der Grundkörper 101 aus zwei steifen Ringen 110, 111 zusammengesetzt. Die beiden steifen Ringe 110, 111 sind über den Dichtring 2, auch bezeichnet als Zwischenring, miteinander verbunden. Insbesondere sind hier die beiden steifen Ringe 110, 111 und das Dichtmittel 1 in einem 2-Komponenten-Spritzgussverfahren zusammen hergestellt. Wie die Fig. 4 und 5 zeigen, kann der Dichtring 2 an seinem radial äußeren Umfang so ausgestaltet sein, dass er in die Sicke 104 einsetzbar ist. Ansonsten unterscheiden sich die Dichtmittel 1 jedoch unwesentlich für den Einsatz in der Rohrmuffe 100 gemäß Fig. 1 oder der Rohrmuffe 100 gemäß Fig. 6.

### Bezugszeichenliste

- 1: Dichtmittel
- 2: Dichtring
- 3: Dichtlippe
- 4: Anlaufschräge
- 5: Dichtfläche
- 6: rückseitiger Hohlraum
- 7: Einsteckseite
- 8: Ausnehmung
- 10: Dichtmitteldicke
- 11: Ausnehmungstiefe
- 12: Ausnehmungs-Bogenlänge
- 13: Ausnehmungsbreite
- 14: Segment-Bogenlänge
- 15: Segmente
- 50: Mittelachse
- 100: Rohrmuffe
- 101: Grundkörper
- 102: Rohrfortsatz
- 103: stirnseitige Öffnung
- 104: Sicke
- 110: erster steifer Ring
- 111: zweiter steifer Ring
- α: Dichtflächenwinkel
- β: Anlaufwinkel
- γ: Segmentwinkel

## Patentansprüche

1. Rohrmuffe (100), insbesondere für ein druckloses Rohrsystem, umfassend
• einen zylindrischen Grundkörper (101) mit einer stirnseitigen Öffnung (103) zum Einstecken eines Rohrs, und ein elastisches Dichtmittel (1),
• wobei das Dichtmittel (1) einen im Grundkörper (101) angeordneten Dichtring (2) und eine vom Dichtring (2) nach innen weisende, ringförmige Dichtlippe (3) aufweist, wobei der Dichtring (2) mit der Dichtlippe (3) einstückig gefertigt ist,
• und wobei die der Öffnung (103) des Grundkörpers (101) zugewandte Seite des Dichtmittels (1) als Einsteckseite (7) definiert ist, **dadurch gekennzeichnet, dass** das Dichtmittel (1) an seiner Einsteckseite (7) eine Vielzahl an Ausnehmungen (8) aufweist, die entlang des Umfangs des Dichtmittels (1) verteilt sind und sich zumindest teilweise in der Dichtlippe (3) befinden.

2. Rohrmuffe nach Anspruch 1, wobei
• der Grundkörper (101) der Rohrmuffe (100) zwei steife Ringe (110, 111) umfasst, die über den Dichtring (2) verbunden sind,
• oder der Grundkörper (101) eine nach innen offene Sicke (104) umfasst, in die der Dichtring (2) eingelegt ist.

3. Rohrmuffe nach einem der vorhergehenden Ansprüche, wobei das Dichtmittel (1) Bereiche mit größter Querschnittsfläche und Bereiche mit kleinster Querschnittsfläche aufweist,
• wobei eine Obergrenze der kleinsten Querschnittsfläche 98%, vorzugsweise 95%, besonders vorzugsweise 90%, der größten Querschnittsfläche beträgt,
• und/oder wobei eine Untergrenze der kleinsten Querschnittsfläche 50%, vorzugsweise 60%, besonders vorzugsweise 70%, der größten Querschnittsfläche beträgt.

4. Rohrmuffe nach einem der vorhergehenden Ansprüche, wobei das Dichtmittel (1) in Axialrichtung an der dicksten Stelle eine Dichtmitteldicke (10) aufweist und die einzelne Ausnehmung (8) in Axialrichtung an der tiefsten Stelle eine Ausnehmungstiefe (11) aufweist,
• wobei eine Obergrenze der Ausnehmungstiefe (11) 50%, vorzugsweise 40%, der Dichtmitteldicke (10) beträgt,
• und/oder wobei eine Untergrenze der Ausnehmungstiefe (11) 5%, vorzugsweise 10%, der Dichtmitteldicke (10) beträgt.

5. Rohrmuffe nach einem der vorhergehenden Ansprüche, wobei die Erstreckung der einzelnen Ausnehmung (8) in Umfangsrichtung als Ausnehmungs-Bogenlänge (12) definiert ist, die Ausnehmung (8) an ihrem radial inneren Ende ihre größte Ausnehmungs-Bogenlänge (12) aufweist und sich die Ausnehmungs-Bogenlänge (12) nach radial außen verringert.

6. Rohrmuffe nach einem der vorhergehenden Ansprüche, wobei am Dichtmittel (1) entlang des Umfangs Segmente (15) mit jeweils einem Segmentwinkel (γ) definiert sind, wobei in jedem Segment (15) höchstens eine Ausnehmung (8) angeordnet ist,
• wobei eine Obergrenze des Segmentwinkels (γ) 45°, vorzugsweise 30°, besonders vorzugsweise 20°, beträgt,
• und/oder wobei eine Untergrenze des Segmentwinkels (γ) 3°, vorzugsweise 5°, besonders vorzugsweise 10°, beträgt.

7. Rohrmuffe nach Anspruch 6, wobei die größte Ausnehmungs-Bogenlänge (12) der einzelnen Ausnehmung (8) als Ausnehmungsbreite (13) definiert ist,
• wobei eine Obergrenze der Ausnehmungsbreite (13) 100%, vorzugsweise 99%, besonders vorzugsweise 95%, der Segment-Bogenlänge (14) des Segments (15) beträgt,
• und/oder eine Untergrenze der Ausnehmungsbreite 20%, vorzugsweise 50%, der Segment-Bogenlänge (14) des Segments (15) beträgt.

8. Rohrmuffe nach Anspruch 6 oder 7, wobei in jedem Segment (15) oder nur in jedem zweiten Segment (15) oder nur in jedem dritten Segment (15) oder nur in jedem vierten Segment (15) eine Ausnehmung (8) angeordnet ist.

## Claims

1. Pipe sleeve (100), in particular for a pressureless pipe system, comprising
- a cylindrical base body (101) with an opening (103) at the front side for inserting a pipe, and an elastic sealing means (1),
- wherein the sealing means (1) comprises a sealing ring (2) arranged in the base body (101) and an annular sealing lip (3) directed inwards from the sealing ring (2), wherein the sealing ring (2) is made in one piece with the sealing lip (3),
- and wherein the side of the sealing means (1) facing the opening (103) of the base body (101) is defined as inserting side (7),
- **characterised in that** the sealing means (1) comprises at its inserting side (7) a plurality of recesses (8), which are distributed along the circumference of the sealing means (1) and are disposed at least partially in the sealing lip (3).

2. Pipe sleeve according to claim 1, wherein
- the base body (101) of the pipe sleeve (100) comprises two rigid rings (110, 111), which are connected via the sealing ring (2),
- or the base body (101) comprises an inwardly open groove (104), into which the sealing ring (2) is inserted.

3. Pipe sleeve according to one of the preceding claims, wherein the sealing means (1) comprises portions with largest cross-sectional area and portions with smallest cross-sectional area,
- wherein an upper limit of the smallest cross-sectional area is 98%, preferably 95%, particularly preferably 90%, of the largest cross-sectional area,
- and/or wherein a lower limit of the smallest cross-sectional area is 50%, preferably 60%, particularly preferably 70%, of the largest cross-sectional area.

4. Pipe sleeve according to one of the preceding claims, wherein the sealing means (1) comprises a sealing means thickness (10) in axial direction at the thickest position and the individual recess (8) comprises a recess depth (11) in axial direction at the deepest position,
- wherein an upper limit of the recess depth (11) is 50%, preferably 40%, of the sealing means thickness (10),
- and/or wherein a lower limit of the recess depth (11) is 5%, preferably 10%, of the sealing means thickness (10).

5. Pipe sleeve according to one of the preceding claims, wherein the extension of the individual recess (8) in circumferential direction is defined as recess arc length (12), the recess (8) comprises its largest recess arc length (12) at its radially inner end and the recess arc length (12) decreases radially outwards.

6. Pipe sleeve according to one of the preceding claims, wherein segments (15) are defined at the sealing means (1) along the circumference, each with a segment angle (γ), wherein at most one recess (8) is arranged in each segment (15),
- wherein an upper limit of the segment angle (γ) is 45°, preferably 30°, particularly preferably 20°,
- and/or wherein a lower limit of the segment angle (γ) is 3°, preferably 5°, particularly preferably 10°.

7. Pipe sleeve according to claim 6, wherein the largest recess arc length (12) of the individual recess (8) is defined as the recess width (13),
- wherein an upper limit of the recess width (13) is 100%, preferably 99%, particularly preferably 95%, of the segment arc length (14) of the segment (15),
- and/or a lower limit of the recess width is 20%, preferably 50%, of the segment arc length (14) of the segment (15).

8. Pipe sleeve according to claim 6 or 7, wherein a recess (8) is arranged in each segment (15) or only in each second segment (15) or only in each third segment (15) or only in each fourth segment (15).

## Revendications

1. Manchon de tuyau (100), en particulier pour un système de tuyau sans pression, comprenant
- un corps de base (101) cylindrique avec une ouverture (103) côté avant pour l'enfichage d'un tuyau, et un moyen d'étanchéité (1) élastique,
- dans lequel le moyen d'étanchéité (1) présente un anneau d'étanchéité (2) agencé dans le corps de base (101) et une lèvre étanche (3) annulaire tournée vers l'intérieur depuis l'anneau d'étanchéité (2), dans lequel l'anneau d'étanchéité (2) est fabriqué d'un seul tenant avec la lèvre étanche (3),
- et dans lequel le côté tourné vers l'ouverture (103) du corps de base (101) du moyen d'étanchéité (1) est défini comme côté d'enfichage (7), **caractérisé en ce que** le moyen d'étanchéité (1) présente sur son côté d'enfichage (7) une pluralité d'évidements (8) qui sont répartis le long de la périphérie du moyen d'étanchéité (1) et se trouvent au moins partiellement dans la lèvre étanche (3).

2. Manchon de tuyau selon la revendication 1, dans lequel
- le corps de base (101) du manchon de tuyau (100) comporte deux anneaux (110, 111) rigides qui sont reliés par le biais de l'anneau d'étanchéité (2),
- ou le corps de base (101) comporte une moulure (104) ouverte vers l'intérieur, dans laquelle l'anneau d'étanchéité (2) est inséré.

3. Manchon de tuyau selon l'une des revendications précédentes, dans lequel le moyen d'étanchéité (1) présente des zones avec une aire de section plus grande et des zones avec une aire de section plus petite,
- dans lequel une limite supérieure de l'aire de section plus petite s'élève à 98 %, de préférence à 95 %, de manière particulièrement préférée à 90 %, de l'aire de section plus grande,
et/ou dans lequel une limite inférieure de l'aire de section plus petite s'élève à 50 %, de préférence à 60 %, de manière particulièrement préférée à 70 %, de l'aire de section plus grande.

4. Manchon de tuyau selon l'une des revendications précédentes, dans lequel le moyen d'étanchéité (1) présente dans le sens axial au point le plus épais une épaisseur de moyen d'étanchéité (10) et l'évidement (8) individuel présente dans le sens axial au point le plus profond une profondeur d'évidement (11),
- dans lequel une limite supérieure de la profondeur d'évidement (11) s'élève à 50 %, de préférence à 40 %, de l'épaisseur de moyen d'étanchéité (10),
- et/ou dans lequel une limite inférieure de la profondeur d'évidement (11) s'élève à 5 %, de préférence à 10 %, de l'épaisseur de moyen d'étanchéité (10).

5. Manchon de tuyau selon l'une des revendications précédentes, dans lequel l'étendue de l'évidement individuel (8) est définie dans le sens périphérique comme longueur d'arc d'évidement (12), l'évidement (8) présente à son extrémité radialement intérieure sa longueur d'arc d'évidement (12) la plus grande et la longueur d'arc d'évidement (12) diminue radialement vers l'extérieur.

6. Manchon de tuyau selon l'une des revendications précédentes, dans lequel des segments (15) avec respectivement un angle de segment (γ) sont définis sur le moyen d'étanchéité (1) le long de la périphérie, dans lequel au plus un évidement (8) est agencé dans chaque segment (15),
- dans lequel une limite supérieure de l'angle de segment (γ) s'élève à 45°, de préférence à 30°, de manière particulièrement préférée à 20°,
- et/ou dans lequel une limite inférieure de l'angle de segment (γ) s'élève à 3°, de préférence à 5°, de manière particulièrement préférée à 10°.

7. Manchon de tuyau selon la revendication 6,
dans lequel la longueur d'arc d'évidement (12) la plus grande de l'évidement (8) individuel est définie comme largeur d'évidement (13),
- dans lequel une limite supérieure de la largeur d'évidement (13) s'élève à 100 %, de préférence à 99 %, de manière particulièrement préférée à 95 % de la longueur d'arc de segment (14) du segment (15),
- et/ou une limite inférieure de la largeur d'évidement s'élève à 20%, de préférence à 50 %, de la longueur d'arc de segment (14) du segment (15).

8. Manchon de tuyau selon la revendication 6 ou 7,
dans lequel un évidement (8) est agencé dans chaque segment (15) ou seulement dans chaque deuxième segment (15) ou seulement dans chaque troisième segment (15) ou seulement dans chaque quatrième segment (15).
